# EUROPÄISCHE PATENTSCHRIFT

(11) **EP 2 026 987 B1**
(45) Veröffentlichungstag und Bekanntmachung des Hinweises auf die Patenterteilung: **15.12.2010**
(21) Anmeldenummer: 07728976.7
(22) Anmeldetag: 10.05.2007
(51) Int. Cl.: B60C 23/06

(54) **REIFENMODUL UND VERFAHREN ZUR ERFASSUNG VON RAD- UND/ODER REIFENZUSTANDSGRÖSSEN**
TYRE MODULE AND METHOD FOR SENSING WHEEL STATE VARIABLES AND/OR TYRE STATE VARIABLES
MODULE POUR PNEUS ET PROCÉDÉ PERMETTANT DE SAISIR LES VALEURS RELATIVES A L'ÉTAT DES ROUES ET/OU DES PNEUS

(30) Priorität: 22.05.2006 DE 102006024156; 12.09.2006 DE 102006043505
(43) Veröffentlichungstag der Anmeldung: 25.02.2009
(73) Patentinhaber: Continental Teves AG & Co. oHG, 60488 Frankfurt (DE)
(72) Erfinder: KAMMANN, Stefan, 65779 Kelkheim (DE)
(86) Internationale Anmeldenummer: PCT/EP2007/054524
(87) Internationale Veröffentlichungsnummer: WO 2007/134975

(56) Entgegenhaltungen:
- EP-A- 1 596 407
- WO-A-2004/056591
- US-B1- 6 538 566

## Beschreibung

Die Erfindung betrifft ein Reifenmodul zur Erfassung von Rad- und/oder Reifenzustandsgrößen gemäß Oberbegriff von Anspruch 1 sowie ein Verfahren zur Erfassung von Rad- und/oder Reifenzustandsgrößen gemäß Oberbegriff von Anspruch 10.

In modernen Kraftfahrzeugen werden vermehrt Reifenluftdrucküberwachungssysteme verwendet, um Defekte oder Unfälle, welche auf einen unkorrekten Reifenluftdruck zurückzuführen sind, zu vermeiden. Diese herkömmlichen Systeme beinhalten meist eine direkte oder indirekte Erfassung des Luftdruckes.

Insbesondere für die Sicherheit und die Haltbarkeit eines Reifens ist jedoch nicht der Reifenluftdruck sondern die Reifenaufstandslänge (oder auch Latschlänge genannt) entscheidend. Die (mittlere) Latschlänge eines Reifens ist eine aussagekräftige Größe für den Zustand des Reifens oder des Rades.

In der WO 2005/056311 A2 werden ein Sensortransponder und ein Verfahren zur Reifenaufstandslängen- und Radlastmessung offenbart. In einer Ausführungsform ist der Transponder, welcher einen Beschleunigungssensor umfasst, auf der Innenseite eines Reifens, gegenüber der Reifenlauffläche befestigt. Die Messung der Beschleunigung kann nach kapazitivem, piezoresistivem, ferroelektrischem, elektrodynamischem oder auch piezoelektrischem Prinzip erfolgen. Der zeitliche Verlauf der Beschleunigung wird mittels des Beschleunigungssensors erfasst und aufwendig ausgewertet, um die Latschlänge zu erhalten.

Ausgehend von diesem Stand der Technik liegt der Erfindung die Aufgabe zugrunde, ein verbessertes Reifenmodul zur Erfassung von Rad- und/oder Reifenzustandsgrößen bereitzustellen, welches einfach und kostengünstig herzustellen ist und ohne eine aufwändige Auswertung von Messdaten auskommt.

Aus der US 6 538 566 B1 ist ein Reifendruckmesssystem mit einem Beschleunigungssensor bekannt. Die verschiedenen Beschleunigungswerte werden während des Abrollens des Reifens gemessen, insbesondere wenn der Reifen beziehungsweise die Lauffläche auf dem Boden abrollt. Aus den Werten wird schließlich ein Reifenparameter bestimmt.

Aus der WO 2004/056591A1 ist ein Sensor mit einem Schalter bekannt, der in einem Reifen angeordnet ist. Wenn der Reifen über dem Boden abgerollt wird, erfolgt eine Schaltung des Schalters von einem ersten in einen zweiten Zustand. Wenn der Reifen weiter abrollt erfolgt eine weitere Schaltung des Schalters von dem zweiten in den ersten Zustand. Mittels dieser zwei Schaltvorgänge kann ein dynamischer Parameter des Reifens bestimmt werden.

Aus der EP 1 596 407 A1 ist ein Reifendruckmesssystem bekannt, das unter Verwendung eines Beschleunigungsschalters sicherstellen soll, dass das Reifendruckmesssystem nur dann aktiviert ist, wenn das auch erforderlich ist, beispielsweise wenn das Fahrzeug in Bewegung ist. In diesem Fall schaltet der Beschleunigungssensor die Energieversorgung der entsprechenden Radelektronik ein.

Diese Aufgabe wird erfindungsgemäß durch das Reifenmodul gemäß Anspruch 1 gelöst.

Die Erfindung geht dabei von der Idee aus, dass das Reifenmodul einen Beschleunigungsschalter umfasst, mit Hilfe dessen Rad- und/oder Reifenzustandsgrößen erfasst werden. Bevorzugt ist der Beschleunigungsschalter auf einer Innenseite der Reifenlauffläche angeordnet. Besonders bevorzugt ist das Reifenmodul auf einer Innenseite der Reifenlauffläche angeordnet. Der Beschleunigungsschalter weist eine oder mehrere Schaltschwellen auf. Diese sind besonders bevorzugt durch eine Steuerung auswählbar und/oder einstellbar. Damit lässt sich der Beschleunigungsschalter an unterschiedliche Anforderungen oder Bedingungen, wie z.B. die Fahrgeschwindigkeit, anpassen.

Unter einem "Beschleunigungsschalter" wird in Verallgemeinerung ein Schalter verstanden, der in Abhängigkeit von der Beschleunigung zwei oder auch mehr diskrete Zustände annehmen kann (Grenzwertschalter). Im einfachsten Fall sind dies die beiden Zustände "offen" und "geschlossen" bei einem schließenden ("Normalzustand": offen) bzw. öffnenden ("Normalzustand": geschlossen) Kontaktschalter. Der Schalter kann aber auch als Umschalter funktionieren, d.h. er schaltet zwischen zwei oder mehr Kontaktstellungen; die entsprechenden Zustände sind dann z.B. "Kontakt 1 geschlossen, Kontakt 2 offen" und "Kontakt 1 offen, Kontakt 2 geschlossen". Am Ausgang des Schalters können entsprechend zwei oder auch mehrere unterschiedliche Signale ausgegeben werden.

Besonders bevorzugt wird mit Hilfe des Beschleunigungsschalters eine Kenngröße, welche ein Maß für die Reifenaufstandslänge oder die Latschdurchlaufzeit oder eine von diesen Größen abhängige Größe ist, bestimmt. Damit ist eine Überwachung, und gegebenenfalls Bewarnung, des Zustands des Reifens oder des Rades möglich.

Gemäß einer bevorzugten Ausführungsform des Reifenmoduls umfasst das Reifenmodul außerdem mindestens ein weiteres elektronisches Bauelement, wie einen Sensor, eine Auswerteelektronik, eine Sende- und/oder Empfangseinrichtung, einen Speicher, einen Energiewandler, welcher eine Beschleunigungsänderung oder eine Verformung zur Gewinnung elektrischer Energie verwendet, oder eine Batterie. Bei dem Sensor handelt es sich besonders bevorzugt um einen Drucksensor zur direkten Überwachung des Reifendruckes.

In einer Weiterbildung des erfindungsgemäßen Reifenmoduls umfasst das Reifenmodul eine Schaltung, mit welcher das Reifenmodul und/oder einzelne elektronische Bauelemente durch den Beschleunigungsschalter gesteuert werden. Besonders bevorzugt wird dabei das Einschalten bzw. Aktivieren des Reifenmoduls und/oder einzelner elektronischer Bauelemente durch den Beschleunigungsschalter gesteuert. Damit kann das Reifenmodul durch den Beschleunigungsschalter z.B. erst dann aktiviert werden, wenn das Rad eine vorgegebene Geschwindigkeit erreicht hat. Hierdurch kann eine Batterie zur Versorgung des Reifenmoduls bei Stillstand oder langsamer Fahrt des Reifens geschont werden.

Der Beschleunigungsschalter weist bevorzugt eine oder mehrere Schaltschwellen auf. Diese sind besonders bevorzugt durch eine Steuerung auswählbar und/oder einstellbar. Damit lässt sich der Beschleunigungsschalter an unterschiedliche Anforderungen oder Bedingungen, wie z.B. die Fahrgeschwindigkeit, anpassen.

Es ist auch bevorzugt, dass der Beschleunigungsschalter derart ausgeführt ist, dass er bei Erreichen einer vorgegebenen Geschwindigkeit oder Beschleunigung von einem ersten Schaltzustand in einen zweiten Schaltzustand schaltet und diesen zweiten Schaltzustand dann solange beibehält, bis er mit Hilfe eines Steuersignals in den ersten Schaltzustand zurückgesetzt wird. Diese Ausführungsform eignet sich besonders zum Aufwecken des Reifenmoduls.

Es ist aber auch bevorzugt, dass der Beschleunigungsschalter derart ausgeführt ist, dass er bei Erreichen einer ersten vorgegebenen Geschwindigkeit oder Beschleunigung von einem ersten Schaltzustand in einen zweiten Schaltzustand schaltet und bei Erreichen einer zweiten vorgegebenen Geschwindigkeit oder Beschleunigung, welche gleich oder unterschiedlich zu der ersten vorgegebenen Geschwindigkeit oder Beschleunigung ist, von dem zweiten Schaltzustand in den ersten Schaltzustand zurückschaltet. Diese Ausführungsform eignet sich besonders zur Latschlängenbestimmung.

In einer Weiterbildung des erfindungsgemäßen Reifenmoduls umfasst dieses mehrere Beschleunigungsschalter, welche in einem Gehäuse oder auf einem Substrat oder auf einer Leiterplatte, angebracht sind. Die Beschleunigungsschalter sind dabei besonders bevorzugt als MEMS-Anordnung ausgeführt. So wird eine Vielzahl von Funktionalitäten bei möglichst kompaktem Aufbau erreicht.

Die einzelnen Beschleunigungsschalter sind, um unterschiedliche Aufgaben zu erfüllen, zumindest teilweise unterschiedlich bezüglich Aufbau, Größe oder Ausrichtung im Reifenmodul ausgeführt und/oder besitzen unterschiedliche Schalteigenschaften. Unterschiedliche Schalteigenschaften sind besonders bevorzugt: unterschiedliche Schaltschwellen, gleiche oder unterschiedliche Schaltschwellen beim Öffnen und Schließen (Beschleunigungsschalter mit oder ohne Schalt-Hysterese) oder Beschleunigungsschalter mit oder ohne Selbsthaltung.

Dabei sind bevorzugt mindestens zwei Beschleunigungsschalter derart ausgeführt, dass sie eine Kenngröße, welche ein Maß für die Reifenaufstandslänge oder die Latschdurchlaufzeit ist, jeweils in unterschiedlichen Geschwindigkeitsbereichen bestimmen. Hierdurch wird eine zuverlässige und genaue Bestimmung der Latschlänge in unterschiedlichen Geschwindigkeitsbereichen erreicht, da die Beschleunigungsschalter jeweils für einen Geschwindigkeitsbereich optimiert sind.

Mindestens ein Beschleunigungsschalter ist bevorzugt derart ausgeführt, dass er bei Erreichen einer vorgegebenen Geschwindigkeit von einem ersten Schaltzustand in einen zweiten Schaltzustand schaltet und diesen zweiten Schaltzustand dann solange beibehält, bis er mit Hilfe eines Steuersignals in den ersten Schaltzustand zurückgesetzt wird. Solch ein Schalter mit Selbsthaltung wird besonders bevorzugt zur Realisierung einer Aufweck-Funktion eingesetzt.

Gemäß einer weiteren bevorzugten Ausführungsform umfasst das Reifenmodul mindestens ein Beschleunigungsschalter zum Aktivieren oder Einschalten des Reifenmoduls und/oder einzelner elektronischer Bauelemente des Reifenmoduls (Aufweck-Funktion).

Außerdem liegt der Erfindung die Aufgabe zugrunde, ein Verfahren zur Erfassung von Rad- und/oder Reifenzustandsgrößen bereitzustellen, welches einfach und kostengünstig durchzuführen ist und ohne eine aufwändige Auswertung von Messdaten auskommt.

Diese Aufgabe wird erfindungsgemäß durch das Verfahren gemäß Anspruch 11 gelöst.

Dem erfindungsgemäßen Verfahren liegt dabei der Gedanke zugrunde, dass eine Kenngröße, welche ein Maß für die Reifenaufstandlänge oder eine mit ihr verbundene Größe, wie z.B. die Latschdurchlaufzeit, mit einem Beschleunigungsschalter bestimmt wird.

Dabei wird bevorzugt die Kenngröße in unterschiedlichen Geschwindigkeitsbereichen durch einen Beschleunigungsschalter mit mehr als einer Schaltschwelle oder durch mindestens zwei Beschleunigungsschalter mit unterschiedlichen Schalteigenschaften bestimmt wird. Dadurch, dass die Schaltschwellen eines Beschleunigungsschalters oder die Schalteigenschaften/-schwellen mehrerer, verschiedener Beschleunigungsschalter jeweils für einen Geschwindigkeitsbereich optimiert sind, wird eine zuverlässige und genaue Bestimmung der Latschlänge in unterschiedlichen Geschwindigkeitsbereichen erreicht.

Gemäß einer bevorzugten Ausführungsform des Verfahrens werden durch mindestens einen Beschleunigungsschalter das Reifenmodul und/oder einzelne elektronische Bauelemente des Reifenmoduls gesteuert. Dabei ist es besonders bevorzugt, dass das Reifenmodul und/oder einzelne elektronische Bauelemente des Reifenmoduls ein- oder ausgeschaltet werden. Ganz besonders bevorzugt wird das Reifenmodul aktiviert bzw. eingeschaltet, wenn das Rad eine vorgegebene Geschwindigkeit erreicht, was mit Hilfe eines Beschleunigungsschalters erkannt wird. Hierdurch kann eine Batterie zur Versorgung des Reifenmoduls bei Stillstand oder langsamer Fahrt des Reifens geschont werden.

Gemäß einer Weiterbildung des erfindungsgemäßen Verfahrens wird die ermittelte Kenngröße für mindestens eines der folgenden Verfahren verwendet: zur Ermittlung der Position des Reifens am Fahrzeug; zur Beladungsabhängigen Druckwarnung; zum Wankausgleich, insbesondere über ein Elektronisches-Stabilitäts-Programm (ESP); zur Erkennung der Radlast und Verwendung dieser Information in anderen Fahrzeugsteuersystemen; zur Überschlagsfrüherkennung; zur Radabhebe-Erkennung; oder zur Erkennung der Schwerpunktslage des Fahrzeugs. Die Positionsermittlung des Reifens wird besonders bevorzugt bei Kurvenfahrt, Bremsung oder Beschleunigung durchgeführt. Die Kenngröße wird besonders bevorzugt zur Erkennung der Schwerpunktslage des Fahrzeugs verwendet, um so z.B. gefährliche Beladungszustände des Fahrzeuges (schwerer Dachgepäckträger) zu erkennen.

Ein mit der Erfindung erzielter Vorteil liegt darin, dass zur Auswertung des Beschleunigungsschalters, welcher nur eine begrenzte Zahl von diskreten Zuständen annehmen kann, keine aufwendige Auswertung von Messdaten notwendig ist. Es kann eine direkte Einlesung der Messdaten in einen Mikrokontroller erfolgen ohne vorherige Analog-Digital-Wandlung.

Weitere bevorzugte Ausführungsformen der Erfindung ergeben sich aus den Unteransprüchen und der nachfolgenden Beschreibung anhand von Figuren.

Es zeigen
- Fig. 1: eine schematische Darstellung eines abrollenden Reifens,
- Fig. 2: einen schematischen Verlauf einer Beschleunigung in einem Reifen beim Abrollen des Reifens,
- Fig. 3: eine erste Ausführungsform eines beispielgemäßen Beschleunigungsschalters,
- Fig. 4: eine Schaltschwelle eines beispielgemäßen Beschleunigungsschalters,
- Fig. 5: eine zweite Ausführungsform eines beispielgemäßen Beschleunigungsschalters,
- Fig. 6: eine dritte Ausführungsform eines beispielgemäßen Beschleunigungsschalters,
- Fig. 7: eine vierte Ausführungsform eines beispielgemäßen Beschleunigungsschalters,
- Fig. 8: eine fünfte Ausführungsform eines beispielgemäßen Beschleunigungsschalters,
- Fig. 9: eine sechste Ausführungsform eines beispiel- gemäßen Beschleunigungsschalters,
- Fig. 10: eine beispielsgemäße Ausführungsform einer Kombination von Beschleunigungsschaltern in einem Gehäuse.

Im Bereich der Reifensensorik (Reifendruckkontrolle) ist es üblich, dass zumeist an der Felge befindliche (Reifen)Module mindestens eine der Größen Druck, Temperatur oder Beschleunigung (ein oder mehrdimensional) messen und meist an eine Zentraleinheit am Fahrzeug übertragen. Ein Reifenmodul kann dabei verschiedene elektronische Bauteile oder elektronische Bauelemente umfassen, wie z.B. Sensoren, insbesondere einen Drucksensor, Auswerteelektronik, Sende- und/oder Empfangseinrichtungen zum Austausch von Steuer- und Datensignalen, Speicher oder Energiequellen zur Versorgung des Moduls / der Bauelemente, wie z.B. einen Energiewandler, welcher eine Beschleunigungsänderung im Reifen oder eine Verformung des Reifen zur Gewinnung elektrischer Energie verwendet, oder eine Batterie.

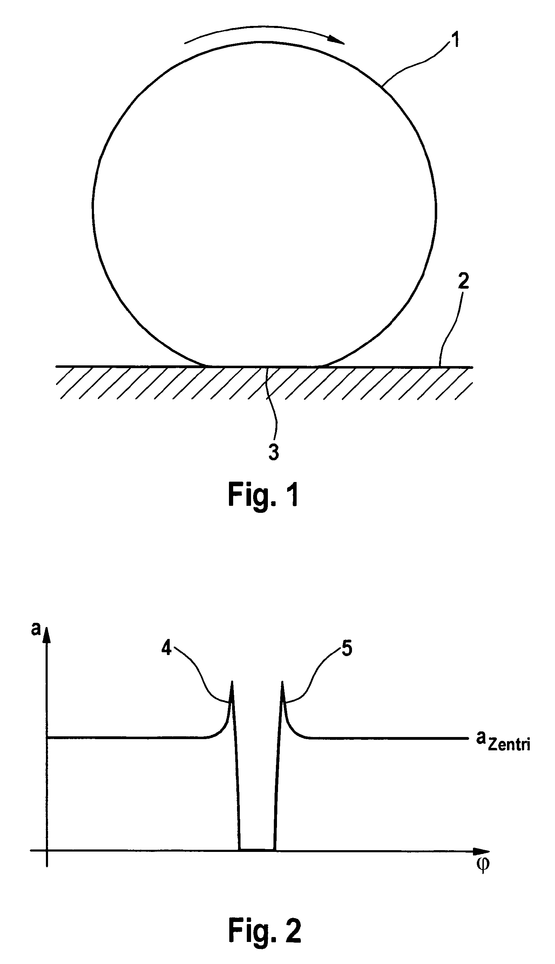

Fig. 1 zeigt in schematischer Darstellung einen Reifen 1, insbesondere eines Kraftfahrzeugs oder Motorrads, welcher auf einem Untergrund 2 abrollt. Während des Abrollens entsteht bekanntlich eine abgeplattete Reifenaufstandfläche, der so genannte Latsch 3. Die Größe (Länge und Breite) und Form des Latschs 3 ist abhängig von Reifenkenndaten, der Radlast, dem Reifendruck, dem Fahrzustand und der Geschwindigkeit.

Es ist ebenfalls bekannt, ein Reifenmodul direkt am Reifeninnerliner zu befestigen und dort neben z.B. Druck und/oder Temperatur den Latsch 3 mittels eines Beschleunigungssensors zu ermitteln und zu übertragen. Latsch 3 umfasst dabei nur einen kleinen Teil des Radumfangs, so dass ein Sensor (und dessen Auswertung bzw. Abtastung), der für die Ermittlung der Latschzeit verwendet wird, eine Auflösung im Bereich weniger µs haben muss. Bisher verwendete Beschleunigungssensoren, die z.B. kapazitiv oder piezoresistiv funktionieren, liefern einen analogen Ausgangswert und erfordern eine Vergleichsstufe oder einen (sehr schnellen) AD-Wandler (Analog-Digital-Wandler), um die Latschlänge damit zu detektieren bzw. auszuwerten. Diese zusätzliche Stufe verbraucht Energie, was nicht gewünscht ist, und verursacht zusätzliche Herstellungskosten.

Die Zeit des Latschdurchlaufs wurde bisher, wie oben erwähnt, mit einem Beschleunigungssensor, der in tangentialer oder radialer Richtung des Reifens angeordnet ist, bestimmt. Fig. 2 zeigt einen beispielhaften schematischen Verlauf der Beschleunigung a am Reifeninnerliner in radialer Richtung bei Abrollen von Reifen 1 als Funktion des Umlaufwinkels ϕ. Ein solcher Verlauf kann z.B. mit einem piezoelektrischen Beschleunigungssensor gemessen werden. Befindet sich der Sensor außerhalb des Latschs 3, so erfährt er die geschwindigkeits- und Radius-abhängige Zentrifugalbeschleunigung a_{Zentri}. Durch Beschleunigungsänderungen, welche bei Latschein- und -austritt 4, 5 auftreten, wird z.B. eine schwingungsfähig gelagerte seismische Masse (Testmasse) zu Schwingungen angeregt. Diese Bewegungsenergie wird durch ein piezoelektrisches Element in elektrische Spannung umgewandelt. Es können durch geeignete, aufwendige Auswertung der Messdaten die Zeiten zwischen Spannungsspitzen ermittelt werden. Aus den zeitlichen Abständen kann die Latschdurchlaufszeit bestimmt werden.

Die so gewonnenen Informationen und Daten, z.B. die Latschzeit, können dann als Bestandteil eines Übertragungsprotokolls von dem die Größen bestimmenden Sensor oder dem (Reifen)Modul oder einer Auswerteeinheit, z.B. aus dem Reifen, an die Fahrzeugelektronik, z.B. eine Zentraleinheit eines Reifenüberwachungssystems im Fahrzeug, gesendet werden. Die Verarbeitung der Daten kann dabei sowohl im Sensor oder Modul als auch in der Fahrzeugelektronik erfolgen.

Entscheidend für die Sicherheit und die Haltbarkeit eines Reifens ist die Latschlänge.

Erfindungsgemäß wird die Latschzeitmessung mit einer Sensorik, die keine zusätzliche elektrische Energie benötigt und dennoch einen digitalen Ausgang (ein oder mehrstufig) zur Verfügung stellt, durchgeführt. Somit ist eine sehr einfache, wenig rechenintensive Auswertung ermöglicht. Die Sensorik wird dabei durch einen Beschleunigungsschalter dargestellt, der bei einer (entweder von außen einstellbar oder fest vorgegebenen) einwirkenden Beschleunigung a einen Kontakt schließt. Der Beschleunigungsschalter kann dabei sowohl makroskopisch als auch als MEMS-Struktur (Micro-Electro-Mechanical System) aufgebaut sein. Beschleunigungssensitive Mikroschalter stellen einen kostengünstigen mikromechanisch gefertigten Grenzwertschalter für Beschleunigungen dar. Der Beschleunigungsschalter erfordert keine analoge Auswertung und benötigt keine Betriebsspannung.

Der Beschleunigungsschalter kann in unterschiedlichen Formen ausgeführt sein. So sind Ausführungsformen mit einem Biegebalken, einer Membran oder einer rollenden Kugel bevorzugt, es sind jedoch auch andere Ausführungsformen denkbar. Im Folgenden werden einige Ausführungsbeispiele von Beschleunigungsschaltern mit Biegebalken beschrieben.

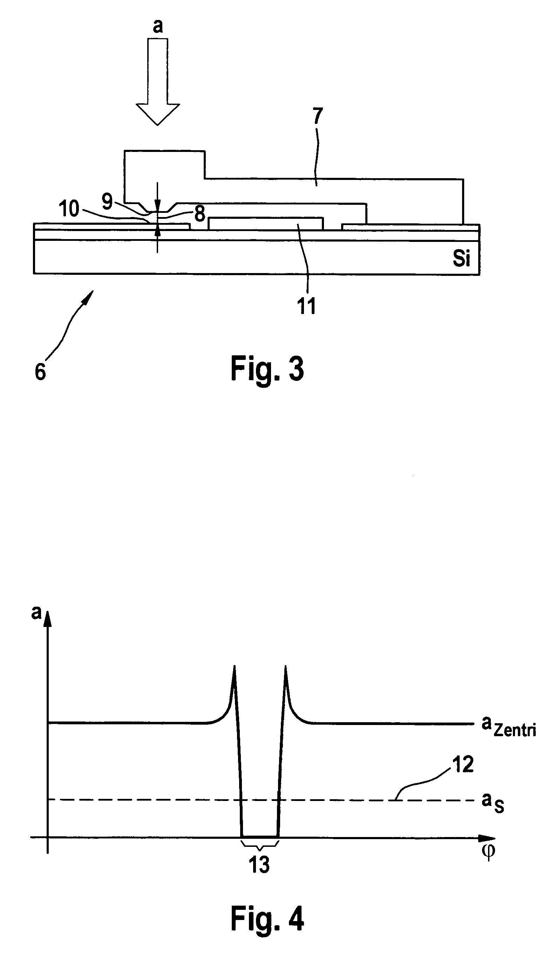

In Fig. 3 ist schematisch in seitlichem Schnitt ein Aufbau eines beispielsgemäßen Beschleunigungsschalters zur Verwendung in einem Reifenmodul dargestellt. Beschleunigungsschalter 6 weist einen Biegebalken 7 auf, an dessen freien Ende ein Kontakt-Pin 9 angeordnet ist. Biegebalken 7 ist an einem Basiselement angebracht, an welchem ein Kontakt-Pin 10 sowie ein Pufferelement 11, welches die Auslenkung des Biegebalkens 7 in Richtung des Basiselements durch Berührung begrenzt, angeordnet sind.

Die Beschleunigung a wirkt dabei auf den Biegebalken 7. Durch die Eigenmasse des Balkens 7 und/oder durch eine zusätzlich aufgebrachte Masse wird nach dem newtonschen Grundsatz eine Kraft auf den Biegebalken 7 ausgeübt, der Biegebalken 7 wird gebogen und bei Überschreitung einer gewissen Beschleunigung a_{S} wird der Kontakt-Abstand 8 zwischen den Kontakt-Pins 9, 10 Null und der Kontakt zwischen Kontakt-Pin 9 und Kontakt-Pin 10 wird geschlossen. Ausgangsgröße des Beschleunigungsschalters 6 ist somit ein digitales Signal: der Schalter ist geschlossen bei einer wirkenden Beschleunigung a, die größer ist als eine Grenzbeschleunigung a_{S}; der Schalter ist offen bei einer wirkenden Beschleunigung a kleiner als die Grenzbeschleunigung a_{S}.

Fig. 4 zeigt eine mögliche Schaltschwelle eines Beschleunigungsschalters. Liegt die (radiale) Beschleunigung a oberhalb der Schaltschwelle 12, so ist der Schalter geschlossen. Während des Latschdurchlaufs 13 geht die Beschleunigung a auf das Reifenmodul auf die Erdbeschleunigung, welche unterhalb der Schaltschwelle 12 liegt, zurück und der Schalter öffnet sich. Die Beschleunigung a im Latsch reduziert sich auf die Erdbeschleunigung - unabhängig von der Fahrzeuggeschwindigkeit. Der Schalter funktioniert erst ab einer bestimmten Fahrzeuggeschwindigkeit - dann, wenn die Zentrifugalbeschleunigung a_{Zentri}, welche von der Fahrzeuggeschwindigkeit abhängt, größer als die Schaltschwelle 12 ist. Liegt die Zentrifugalbeschleunigung a_{Zentri} unterhalb der Schaltschwelle 12, ist der Schalter ständig offen.

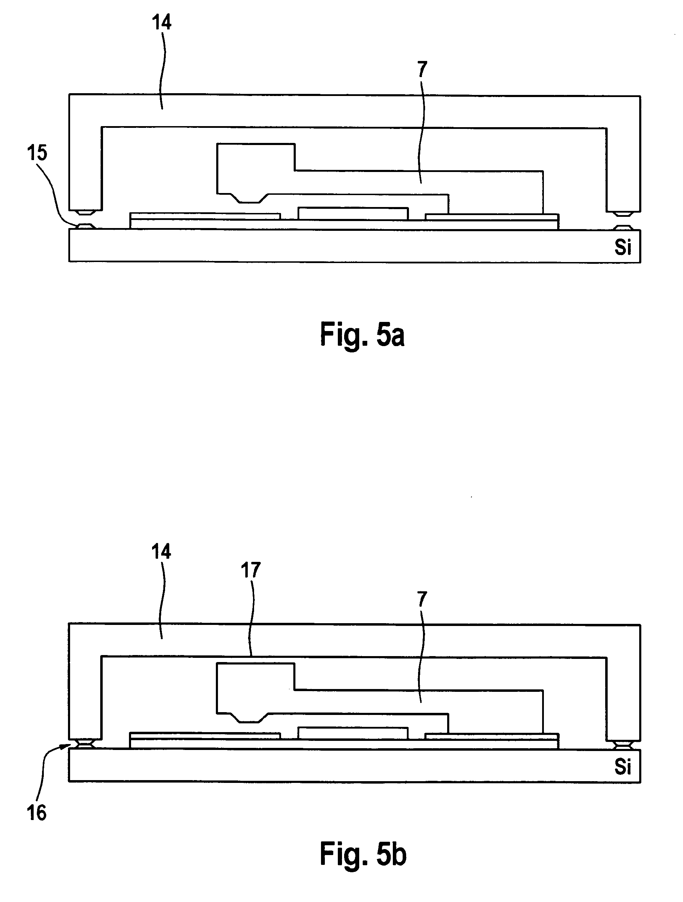

Der Beschleunigungsschalter kann mit Hilfe eines Deckelwavers (bei MEMS) hermetisch gekapselt werden. Dies ist beispielsgemäß in Fig. 5 dargestellt, in welcher der Beschleunigungsschalter aus Fig. 3 dargestellt ist, wobei eine hermetische Kapselung 16 des Beschleunigungsschalters mit einem Deckelwaver 14 über Bondrahmen 15 realisiert ist. Wird der Abstand zwischen einem oberen Anschlag 17 und dem Balken 7 geringer gewählt als der Kontaktabstand 8, so wird ein Überschwingen des Balkens 7 (Kontaktprellen) bei pulsförmiger Krafteinwirkung (Vibration, Schock, ..) wirksam unterdrückt, da die in der Schwingung des Balkens 7 gespeicherte (kinetische) Energie durch den Anschlag 17 abgebaut wird. Wahlweise kann auch am oberen Anschlag 17 ein Kontakt vorgesehen werden, so dass eine Beschleunigungsdetektion in zwei Richtungen realisiert wird.

Die Güte des schwingenden Systems kann ferner über das Vakuum in der hermetischen Kapselung eingestellt werden: Je geringer die Anzahl der Gas-Moleküle innerhalb der Kapselung ist, umso höher ist die Güte. Dies bedeutet umgekehrt, dass mit einem Überdruck im Inneren die Güte des Systems herabgesetzt werden kann und so ein Schwingen des Balkens gedämpft wird.

Ein Beschleunigungsschalter mit einem Deckel kann auch als Umschalter ausgeführt sein (nicht dargestelltes Ausführungsbeispiel). Hierzu ist z.B. zusätzlich zu einem Kontakt auf der Trägerschicht (siehe Bezugsziffer 10 in Fig. 3) ein weiterer Schaltkontakt am Deckel bzw. Deckelwaver angebracht. Der Biegebalken besitzt entsprechend neben einem Kontakt-Pin im unteren Bereich (siehe Bezugsziffer 9 in Fig. 3) auch einen Kontakt-Pin im oberen Bereich, welcher durch Biegen des Biegebalkens in Kontakt mit dem Schaltkontakt am Deckel kommen kann. Die beiden Kontakt-Pins am Biegebalken sind z.B. leitend verbunden. Vorzugsweise ist der Kontakt auf dem Deckel normalerweise, d.h. ohne wirkende Beschleunigung, geschlossen. Dies wird z.B. dadurch erreicht, dass beim Zusammenfügen der Deckel derart aufgesetzt wird, dass dadurch der Biegebalken vorgespannt wird (etwas nach unten gedrückt wird), so dass der obere Kontakt-Pin am Biegebalken in Kontakt mit dem Schaltkontakt am Deckel steht. Bei wirkender Beschleunigung wird der Biegebalken nach unten gedrückt, der Kontakt zwischen oberem Kontakt-Pin am Biegebalken und Schaltkontakt am Deckel öffnet sich und der Kontakt zwischen unterem Kontakt-Pin am Biegebalken und Schaltkontakt am Boden schließt sich. Der Beschleunigungsschalter schaltet also zwischen zwei Stellungen um.

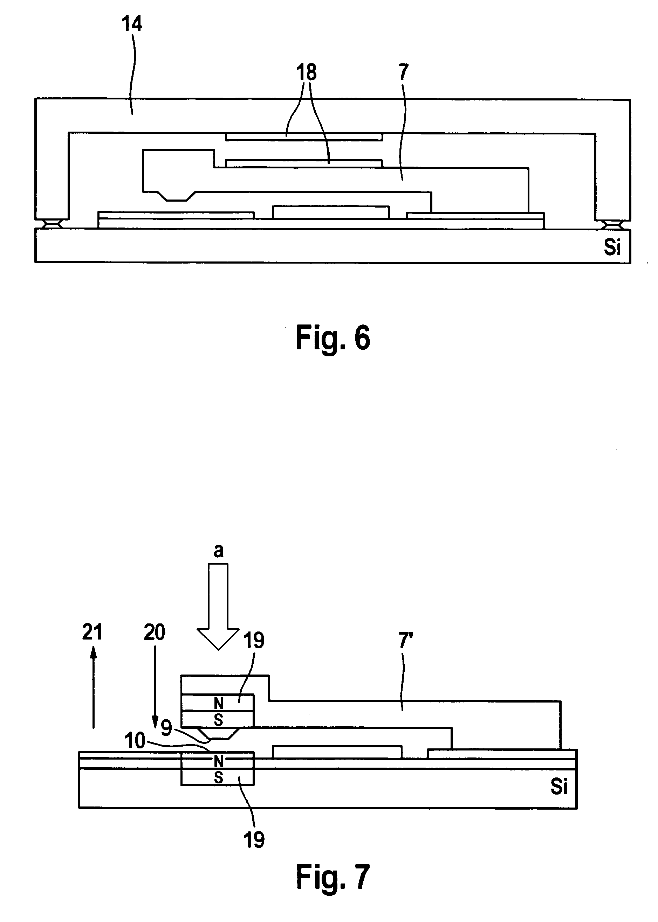

Ein weiteres Beispiel eines Beschleunigungsschalters ist in Fig. 6 abgebildet. Der dargestellte Beschleunigungsschalter entspricht im Wesentlichen dem in Fig. 3 Dargestellten, wobei er zusätzlich einen Deckel 14 sowie zwei Elektroden 18, welche gegenüberliegend am Biegebalken 7 und am Deckel 14 angeordnet sind, umfasst. Der Biegebalken 7 wird entgegen (oder auch gleichförmig) der durch die Beschleunigung a einwirkenden Kraft durch die elektrostatische Aufladung zwischen den Elektroden 18 vorgespannt. Auf diese Art wird die Schaltschwelle 12 des Systems verschoben. Die Form der Elektroden 18, über welche die elektrostatische Kraft erzeugt wird, kann beliebig geformt sein (z.B. flach oder Kammstruktur).

In einer weiteren Ausführungsform des Beschleunigungsschalters weist dieser eine Hysterese auf. Dies bedeutet, dass der Schalter bei einer anderen Beschleunigung schließt, als er öffnet. Z.B. wird der Kontakt bei einer Beschleunigung von 30 g geschlossen und bei einer Beschleunigung von 10 g erst wieder geöffnet. Dies ist vorteilhaft, um ein Rauschen oder Vibrationen im Beschleunigungsverlauf auszufiltern. Diese Hysterese kann beispielsgemäß durch im Schalter integrierte Dauermagnete 19, welche am freien Ende des Biegebalkens 7' und gegenüberliegend im Basiselement angeordnet sind, realisiert werden, wie dies in Fig. 7 dargestellt ist. Die Dauermagnete 19 erzeugen eine magnetische Anziehung 20, welche der Rückstellkraft 21 des Balkens 7' entgegenwirkt. So verstärken die Dauermagnete 19 die auftretende Beschleunigung a nicht-linear. Darüber hinaus gewährleisten die Dauermagnete 19 einen sicheren Kontakt zwischen den Kontakt-Pins 9 und 10 (Kontaktprellen wird unterdrückt).

Um Energie zu sparen und somit eine zur Energieversorgung des (Reifen)Moduls vorgesehene Batterie klein dimensionieren zu können, ist es sinnvoll, das Modul nur bei der Fahrt einzuschalten. Andererseits soll das Modul aber auch bei kürzeren Stopps (z.B. an einer Ampel oder einer Tankstelle) noch funktionieren und Daten senden. Diese Funktionalität wird durch einen Schalter mit Selbsthaltung realisiert, der bei Überschreitung einer bestimmten Beschleunigung einschaltet und dann auch ohne Beschleunigung eingeschaltet bleibt, so lange bis der Schalter aktiv zurückgesetzt wird. Das bedeutet, dass der Schalter auch während des Latschdurchlaufs 13 seinen Wert beibehält (eingeschaltet bleibt). Auch dieser Schalter kann sowohl als MEMS oder makroskopisch aufgebaut sein.

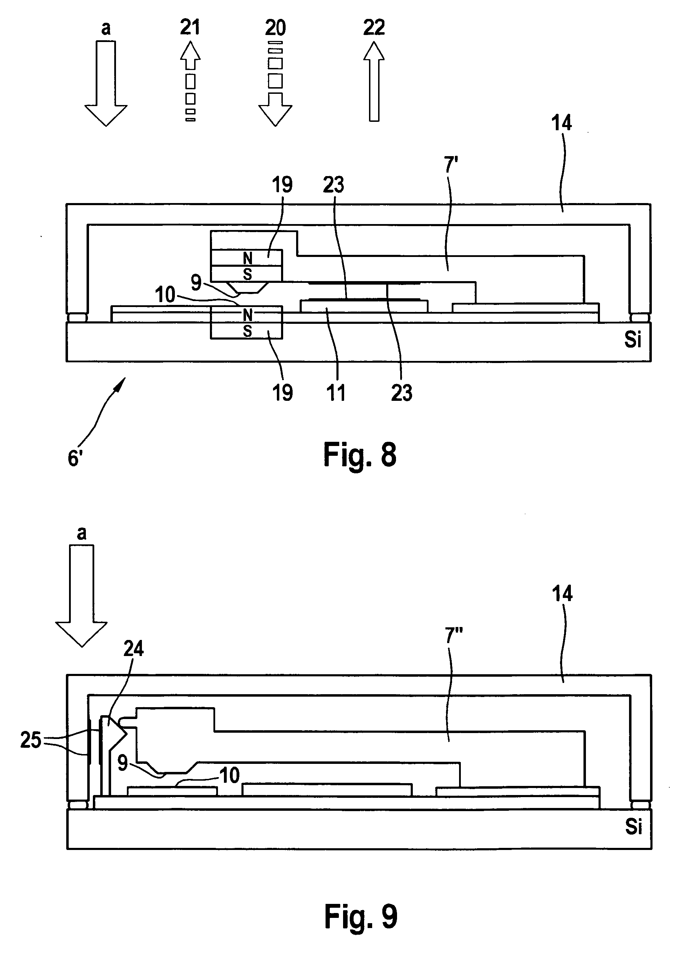

Das in Fig. 8 dargestellte Ausführungsbeispiel eines Beschleunigungsschalters mit Selbsthaltung ist ähnlich zu dem in Fig. 7 dargestellten Ausführungsbeispiel eines Beschleunigungsschalters. Zusätzlich umfasst der in Fig. 8 abgebildete Beschleunigungsschalter 6' noch jedoch noch zwei Elektroden 23, welche am Biegebalken 7' und am Pufferelement 11 gegenüberliegend angeordnet sind.

Die Beschleunigung a wirkt auf die seismische Masse an dem Biegebalken 7' (Eigenmasse des Balkens 7' und/oder eine zusätzlich aufgebrachte Masse). Bei Überschreitung einer gewissen Schwellenbeschleunigung a_{S}, welche z.B. durch die Größendimensionierung einstellbar/vorgebbar ist, werden die Kontakte 9, 10 des Schalters 6' geschlossen. Auch bei diesem Ausführungsbeispiel erzeugen Dauermagnete 19 eine magnetische Anziehung 20, welche der Rückstellkraft 21 des Balkens 7' entgegenwirkt. Die Feldstärke der Magnete ist hier derart gewählt, dass die Dauermagnete 19 für die Selbsthaltung des Schalters sorgen, selbst bei völligem Wegfall von Beschleunigung. Der Kontakt wird beispielsgemäß durch eine elektrostatische Kraft 22 wieder geöffnet. Hierzu wird eine Spannung an die elektrostatischen Elektroden 23 angelegt. Die Spannung kann entweder eine abstoßende Wirkung (gleiche Polarität an beiden Elektroden) oder bei anderer geometrischer Anordnung der Elektroden auch eine anziehende Wirkung (entgegen gesetzte Polarität an beiden Elektroden) haben.

Ein weiteres Ausführungsbeispiel eines Beschleunigungsschalters mit Selbsthaltung ist in Fig. 9 dargestellt. Das Ausführungsbeispiel entspricht im Wesentlichen dem Beschleunigungsschalter aus Fig. 5, nur umfasst dieses Beispiel noch eine mechanische Sperre 24, welche am speziell geformten freien Ende des Biegebalkens 7" angeordnet ist, sowie zwei Elektroden, welche gegenüberliegend an der mechanischen Sperre 24 und dem Deckel 14 angebracht sind.

Gemäß dieses Ausführungsbeispiels wird die Verriegelung des Schalters durch eine mechanische Sperre 24 erreicht. Wird Balken 7" durch eine Beschleunigung a gebogen, so wird die mechanische Sperre 24 zurück gebogen. Balken 7" schnappt unter Sperre 24 und wird damit verriegelt. Die mechanische Sperre 24 ist derart geformt, dass ständig eine Kraft auf den Balken ausgeübt wird und somit die Kontakte 9 und 10 des Schalters sicher geschlossen bleiben. Der Schalter lässt sich lösen, indem die mechanische Sperre 24 durch eine elektrostatische Kraft zurückgezogen wird. Somit wird die Bewegung des Biegebalkens 7" wieder frei gegeben. Hierzu muss eine entsprechende Spannung an die elektrostatischen Elektroden 25 angelegt werden.

Es sind auch weitere, nicht dargestellte Ausführungsbeispiele von Beschleunigungsschaltern möglich, z.B. mit einer Membrane statt eines Biegebalkens. Ebenso kann die Verriegelung jede denkbare mechanische oder magnetische Anordnung aufweisen. Die Lösung der Verriegelung muss nicht zwingend elektrostatisch ausgeführt sein. Auch Anordnungen auf Basis von elektrodynamischen, piezoelektrischen oder sonstigen Prinzipien sind denkbar und anwendbar. Die Schalter können - wie in den Beispielen gezeigt - als Schließer aber auch als Öffner ausgeführt werden.

Eine weitere Aufgabe eines Beschleunigungsschalters in einem Reifenmodul kann eine Aufweck-Funktion sein, welche z.B. anhand einer Aufweckschaltung realisiert wird. Bei einem (Reifen)Modul, welches durch eine Batterie betrieben wird, wird ein Großteil der in der Batterie gespeicherten Energie durch Leckströme verbraucht. Diese Leckströme fließen durch alle angeschlossene Bauteile (Kondensatoren, ICs (Integrierte Schaltkreise), etc.). Der Latschsensor/ Beschleunigungsschalter (und eventuell eine daran angeschlossene Elektronik) kann das Reifenmodul erst dann mit Energie versorgen und "aufwecken", wenn der Kontakt des Beschleunigungsschalters geschlossen wird, d.h. wenn der Reifen sich mit einer zum Schließen des Schalters genügend großen Geschwindigkeit dreht (sog. Rollschalter). Dies kann generell sinnvoll nur mit einer passiven Sensorik geschehen. Im Folgenden kann das Rechenwerk des angeschlossenen Reifenmoduls eine "Selbsterhaltung" des Reifenmoduls aktivieren, die das Modul für eine bestimmte Zeit (Nachlauf) weiterhin mit Energie versorgt. Der Nachlauf wird beispielsgemäß mit einem Feldeffekttransistor realisiert, der den Beschleunigungsschalter überbrückt. In einer beispielsgemäßen Ausführungsform erfüllt ein Beschleunigungsschalter dann also die Doppelfunktion, Latschmessung und Moduleinschaltung. In einer anderen beispielsgemäßen Ausführungsform erfüllt ein Beschleunigungsschalter die Funktion Latschmessung und ein zweiter Beschleunigungsschalter die Funktion Moduleinschaltung.

Der Aufbau eines beispielgemäßen Beschleunigungsschalters mit mehreren Schaltschwellen kann dabei prinzipiell wie in Fig. 3 oder Fig. 7 dargestellt sein, jedoch weist der Beschleunigungsschalter nicht nur eine, sondern mehrere, verschieden ausgelegte Balken auf. Je nach Anwendung können verschiedene (oder mehrere) Balkenkontakte verwendet werden. Je nach Geschwindigkeits- oder Beschleunigungsbereich kann bei einem Beschleunigungsschalter mit mehreren Schaltschwellen die am besten geeignete Schaltschwelle ausgewählt werden.

Es ist aber auch bevorzugt, dass mehrere Beschleunigungsschalter in einem Gehäuse angebracht werden. Die verschiedenen Beschleunigungsschalter können dabei unterschiedlich dimensioniert sein und unterschiedliche Schalteigenschaften (Hysterese, Schaltschwelle, Selbsthaltung) haben. Auch können die Schalter in unterschiedlichen Lagen angeordnet sein, so dass sie auf Beschleunigungen aus verschiedenen Achsen und Winkeln ansprechen.

In MEMS (Micro-Electro-Mechanical System) können ohne weiteres mehrere Strukturen (Schalter etc.) in einem Silizium-Die (Silizium-Plättchen) erschaffen werden. Die Erfindung umfasst also ebenfalls die Kombination von mehr als einem Beschleunigungsschalter auf einem Die (Halbleiter-Plättchen).

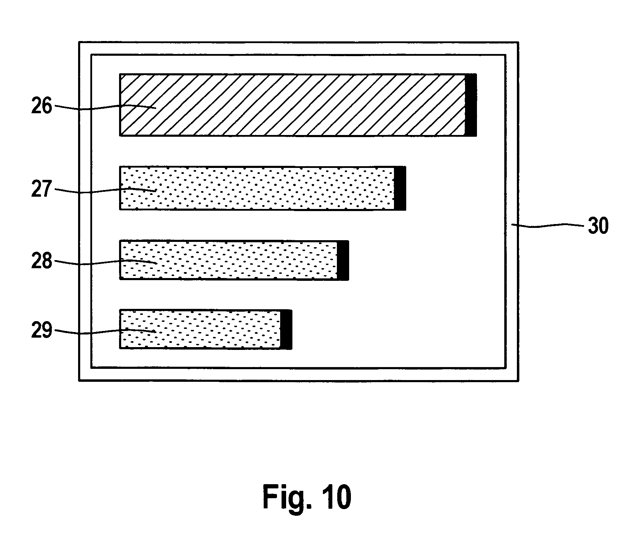

Eine Kombination mehrerer Schalter 26, 27, 28, 29 in einem Gehäuse 30 ist beispielsgemäß in Fig. 10 dargestellt. Bei Schalter 26 handelt es sich um einen Beschleunigungsschalter mit Selbsthaltung, die Beschleunigungsschalter 27, 28 und 29 haben einen unterschiedlichen geometrischen Aufbau und damit unterschiedliche Schaltschwellen.

Der Schalter mit Selbsthaltung 26 sorgt, wie bereits oben beschrieben, für die Spannungsversorgung des Reifenmoduls. Die weiteren Beschleunigungsschalter 27, 28, 29 ermitteln die Latschlänge. Die Schalter sind für unterschiedliche Beschleunigungen ausgelegt und werden nur in bestimmten Geschwindigkeitsbereichen ausgelesen (Schalter 27 für geringe Geschwindigkeiten, Schalter 28 für mittlere Geschwindigkeiten, Schalter 29 für hohe Geschwindigkeiten). So wird z.B. bei geringen Geschwindigkeiten ein Schalter 27 eingesetzt, der bereits bei niedrigen Beschleunigungswerten schaltet und eine niedrige Resonanzfrequenz aufweist. Um auch bei hohen Geschwindigkeiten eine hohe Auflösung zu gewährleisten, wird dort ein Schalter 29 eingesetzt, der eine hohe Resonanzfrequenz aufweist. Aufgrund der großen Beschleunigungskräfte bei hohen Geschwindigkeiten ist keine hohe Sensibilität des Schalters nötig. Generell können die Schalter als Schließer oder Öffner oder Umschalter aufgebaut sein.

Die ermittelte Latschlänge oder Latschzeit kann für eine oder mehrere der folgenden Systemaufgaben verwendet werden:
- Zuordnung der Reifenmodule zu den einzelnen Positionen (Autolocation) durch "dynamische Achslastverteilung". Es treten der Fahrdynamik entsprechende Radlasten auf und dementsprechend auch - je nach Fahrsituation - unterschiedliche Latschlängen. Bei einer Rechtskurve z.B. entsteht eine dynamische Belastung der linken (kurvenäußeren) Räder. Der Latsch auf der linken Seite wird also länger und der Latsch auf der rechten Seite kürzer. Bei z.B. einer Bremsung vergrößert sich der Latsch vorne. So treten also bei Kurvenfahrt bzw. bei Beschleunigungen oder Bremsungen unterschiedliche Latschlängen auf, diese können detektiert und genutzt werden.

- Beladungsabhängige Druckwarnung wird möglich (durch mehr Gewicht wird die Latschlänge größer, das bedeutet, dass mehr Druck im Reifen notwendig ist). Reifenhersteller empfehlen, je nach Beladung unterschiedliche Luftdrücke einzustellen. Meist erfolgt die Unterteilung bisher in zwei oder drei Stufen (leer, teilbeladen, voll-beladen). Hier kann man ein intelligentes Modell anwenden, welches z.B. zusätzlich die Fahrstrecke bzw. die Fahrzeuggeschwindigkeit berücksichtigt (Druckwarnung bei hoher Beladung und dafür nicht ausreichendem Luftdruck erfolgt z.B. erst nach bestimmter Wegstrecke oder ab einer bestimmten Geschwindigkeit).
- Wankbewegungen können erkannt und durch Kommunikation mit dem ESP-Steuergerät (Elektronisches Stabilitäts-Programm) unterbunden werden. Wenn ein Fahrzeug wankt, dann ändern sich die dynamischen Radlasten. Dies kann durch eine Latschlängenmessung erkannt und für andere Systeme genutzt werden.
- Die einzelnen Radlasten können erkannt werden und durch andere Systeme des Fahrzeugs genutzt werden, z.B. zu einer automatischen Leuchtweitenregulierung, wodurch bisher dafür notwendige Sensoren dann entfallen können. Sind die Eigenschaften eines Reifens bekannt, kann man mit Hilfe der Latschlänge und des Reifendrucks die Radlast bestimmen. Die Radlasten können z.B. auch für die Optimierung des Bremssystems (EBV: Elektronische Bremskraftverteilung) genutzt werden.

Weiterhin lassen sich die Feder-Dämpfer-Wirkungen moderner Fahrwerke einstellen. Bei bekannten Radlasten kann das Fahrwerk den Gegebenheiten angepasst werden, was für den Fahrer mehr Komfort und Sicherheit bedeutet. Ebenso kann die Lenkung auf die einzelnen Radlasten (bzw. den Beladungszustand des Fahrzeugs) reagieren. So können Komfort und Handling bei beladenen Fahrzeugen verbessert werden.
- Unebene Untergründe können erkannt werden und durch andere Systeme des Fahrzeugs genutzt werden (z.B. Fahrwerke oder Bremsen).
- Früherkennung von Aquaplaning (oder Fahrt auf Schneematsch etc.) wird möglich (Aufschwimmen eines Rades wird erkannt). Fahrzeugsysteme können darauf reagieren und eine Steuerung/Regelung vornehmen.
- Nutzung des Latschlängensignals für eine Überschlagsfrüherkennung und Vermeidung (Roll-Over-Protection), da ein drohendes Abheben eines oder mehrere Räder erkannt wird.
- Erkennung des Abhebens (oder bevorstehenden Anhebens) eines Fahrzeugrades von der Fahrbahn.
- Erkennung der räumlichen Schwerpunktlage des Fahrzeugs (Schwerpunkterkennung) mit Hilfe der dynamischen Latschveränderung bei Kurvenfahrt und/oder Beschleunigung und/oder Verzögerung

Gegebenenfalls kann die Information bezüglich der Latschzeit/Latschlänge durch eine Information über den Reifendruck, welcher z.B. mit einem Drucksensor bestimmt wird, ergänzt oder kombiniert werden, und dann für eine der oben beschriebenen Verwendungen benutzt werden.

Ebenso kann die Information bezüglich der Latschzeit/Latschlänge zur Überprüfung/Plausibilisierung eines Luftdrucksensors bzw. eines gemessenen Druckwertes verwendet werden. Bisher lässt sich die Plausibilität des Druckwertes eines Drucksensors nur schwer nachvollziehen. Wenn als zweite Information noch die Latschlänge zur Verfügung steht, kann ein "hängender" Drucksensor oder ein Drucksensor, der einen ganz falschen Wert ermittelt, besser erkannt werden.

## Patentansprüche

1. Reifenmodul zur Erfassung von Rad- und/oder Reifenzustandsgrößen, wobei dieses mindestens einen Beschleunigungsschalter (6, 6', 26, 27, 28, 29) umfasst, welcher eine Rad- und/oder Reifenzustandsgröße ermittelt, **dadurch gekennzeichnet, dass** der Beschleunigungsschalter (6, 6', 26, 27, 28, 29) eine oder mehrere Schaltschwellen aufweist, welche durch eine Steuerung auswählbar und/oder einstellbar sind.

2. Reifenmodul nach Anspruch 1, **dadurch gekennzeichnet, dass** mit Hilfe des Beschleunigungsschalters (6, 6', 26, 27, 28, 29) eine Kenngröße, welche ein Maß für die Reifenaufstandslänge oder die Latschdurchlaufzeit ist, bestimmt wird.

3. Reifenmodul nach Anspruch 1 oder 2, **dadurch gekennzeichnet, dass** dieses mindestens ein weiteres elektronisches Bauelement, wie einen Sensor, insbesondere einen Drucksensor, eine Auswerteelektronik, eine Sende- und/oder Empfangseinrichtung, einen Speicher, einen Energiewandler, welcher eine Beschleunigungsänderung oder eine Verformung zur Gewinnung elektrischer Energie verwendet, oder eine Batterie, umfasst.

4. Reifenmodul nach mindestens einem der Ansprüche 1 bis 3, **dadurch gekennzeichnet, dass** dieses eine Schaltung umfasst, mit welcher das Reifenmodul und/oder einzelne elektronische Bauelemente durch den Beschleunigungsschalter (6, 6', 26, 27, 28, 29) gesteuert werden, insbesondere das Einschalten des Reifenmoduls und/oder einzelner elektronischer Bauelemente durch den Beschleunigungsschalter (6) gesteuert wird.

5. Reifenmodul nach mindestens einem der Ansprüche 1 bis 4, **dadurch gekennzeichnet, dass** dieses mehrere Beschleunigungsschalter (6, 6', 26, 27, 28, 29) umfasst, welche in einem Gehäuse oder auf einem Substrat oder auf einer Leiterplatte, insbesondere als MEMS-Anordnung ausgeführt, angebracht sind.

6. Reifenmodul nach Anspruch 5, **dadurch gekennzeichnet, dass** die einzelnen Beschleunigungsschalter (6, 6', 26, 27, 28, 29), unterschiedlich bezüglich Aufbau, Größe oder Ausrichtung im Reifenmodul ausgeführt sind und/oder unterschiedliche Schalteigenschaften besitzen.

7. Reifenmodul nach Anspruch 5 oder 6, **dadurch gekennzeichnet, dass** mindestens zwei Beschleunigungsschalter (6, 6', 26, 27, 28, 29) derart ausgeführt sind, dass sie eine Kenngröße, welche ein Maß für die Reifenaufstandslänge oder die Latschdurchlaufzeit ist, jeweils in einem anderen Geschwindigkeitsbereichen bestimmen.

8. Reifenmodul nach mindestens einem der Ansprüche 5 bis 7, **dadurch gekennzeichnet, dass** mindestens ein Beschleunigungsschalter (6, 6', 26, 27, 28, 29) derart ausgeführt ist, dass er bei Erreichen einer vorgegebenen Geschwindigkeit von einem ersten Schaltzustand in einen zweiten Schaltzustand schaltet und diesen zweiten Schaltzustand dann solange beibehält, bis er mit Hilfe eines Steuersignals in den ersten Schaltzustand zurückgesetzt wird.

9. Reifenmodul nach mindestens einem der Ansprüche 5 bis 8, **dadurch gekennzeichnet, dass** mindestens ein Beschleunigungsschalter (6, 6', 26, 27, 28, 29) zum Aktivieren oder Einschalten des Reifenmoduls und/oder einzelner elektronischer Bauelemente des Reifenmoduls verwendet wird.

10. Verfahren zur Erfassung von Rad- und/oder Reifenzustandsgrößen, wobei eine Kenngröße, welche ein Maß für die Reifenaufstandslänge oder die Latschdurchlaufzeit ist, durch einen Beschleunigungsschalter bestimmt wird, **dadurch gekennzeichnet, dass** die Kenngröße in unterschiedlichen Geschwindigkeitsbereichen durch einen Beschleunigungsschalter (6, 6', 26, 27, 28, 29) mit mehr als einer Schaltschwelle oder durch mindestens zwei Beschleunigungsschalter (6, 6', 26, 27, 28, 29) mit unterschiedlichen Schalteigenschaften, insbesondere Schaltschwellen, bestimmt wird..

11. Verfahren nach Anspruch 10, **dadurch gekennzeichnet, dass** durch mindestens einen Beschleunigungsschalter (6, 6', 26, 27, 28, 29) das Reifenmodul und/oder einzelne elektronische Bauelemente des Reifenmoduls gesteuert, insbesondere ein- oder ausgeschaltet, werden.

12. Verfahren nach mindestens einem der Ansprüche 11 bis 12, **dadurch gekennzeichnet, dass** die Kenngröße für mindestens eines der folgenden Verfahren verwendet wird:
- Ermittlung der Position des Reifens am Fahrzeug, insbesondere bei Kurvenfahrt, Bremsung oder Beschleunigung,
- Beladungsabhängige Druckwarnung,
- Wankausgleich, insbesondere über ein Elektronisches-Stabilitäts-Programm (ESP),
- Erkennung der Radlast und Verwendung dieser Information in anderen Fahrzeugsteuersystemen, insbesondere im System zur Leuchtweitenregulierung,
- Überschlagsfrüherkennung,
- Radabhebe-Erkennung, und
- Erkennung der Schwerpunktlage des Fahrzeugs.

## Claims

1. Tire module for sensing wheel state variables and/or tire state variables, said tire module comprising at least one acceleration switch (6,6', 26, 27, 28, 29) which acquires a wheel state variable and/or tire state variable, **characterized in that** the acceleration switch (6,6', 26, 27, 28, 29) has one or more switching thresholds which can be selected and/or set by means of a controller.

2. Tire module according to Claim 1, **characterized** that a characteristic variable, which is a measure of the length of the tire contact area or the time required to pass through the contact area, is determined using the acceleration switch (6,6', 26, 27, 28, 29).

3. Tire module according to Claim 1 or 2, **characterized in that** said tire module comprises at least one further electronic component, such as a sensor, in particular a pressure sensor, an electronic evaluation system, a transmitting and/or receiving device, a memory, an energy converter which uses a change in acceleration or a deformation in order to acquire electrical energy, or a battery.

4. Tire module according to at least one of Claims 1 to 3, **characterized in that** said tire module comprises a circuit with which the tire module and/or individual electronic components are controlled by the acceleration switch (6,6', 26, 27, 28, 29), in particular the switching on of the tire module and/or of individual electronic components is controlled by the acceleration switch (6).

5. Tire module according to at least one of Claims 1 to 4, **characterized in that** said tire module comprises a plurality of acceleration switches (6,6', 26, 27, 28, 29) which are mounted in a housing or on a substrate or on a printed circuit board, embodied in particular as an MEMS arrangement.

6. Tire module according to Claim 5, **characterized in that** the individual acceleration switches (6,6', 26, 27, 28, 29) are embodied in different ways in terms of design, size or orientation in the tire module and/or have different switching properties.

7. Tire module according to Claim 5 or 6, **characterized in that** at least two acceleration switches (6,6', 26, 27, 28, 29) are embodied in such a way that they respectively determine in a different velocity range a characteristic variable which is a measure of the length of the tire contact area or the time required to pass through the contact area.

8. Tire module according to at least one of Claims 5 to 7, **characterized in that** at least one acceleration switch (6,6', 26, 27, 28, 29) is embodied in such a way that when a predefined velocity is reached it switches from a first switched state into a second switched state and stays in this second switched state until it is reset into the first switched state using a control signal.

9. Tire module according to at least one of Claims 5 to 8, **characterized in that** at least one acceleration switch (6,6', 26, 27, 28, 29) is used to activate or switch on the tire module and/or individual electronic components of the tire module.

10. Method for sensing wheel state variables and/or tire state variables, a characteristic variable, which is a measure of the length of the tire contact area or the time required to pass through the contact area, being determined by an acceleration switch, **characterized in that** the characteristic variable is determined in different velocity ranges by means of an acceleration switch (6,6', 26, 27, 28, 29) having more than one switching threshold or by means of at least two acceleration switches (6,6', 26, 27, 28, 29) having different switching properties, in particular switching thresholds.

11. Method according to Claim 10, **characterized in that** the tire module and/or individual electronic components of the tire module are controlled, in particular switched on or off, by means of at least one acceleration switch (6,6', 26, 27, 28, 29).

12. Method according to at least one of Claims 10 to 11, **characterized in that** the characteristic variable is used for at least one of the following methods:
- acquisition of the position of the tire on the vehicle, in particular in the case of cornering, braking or acceleration,
- load-dependent pressure warning,
- rolling equalization, in particular by means of an electronic stability program (ESP),
- detection of the wheel load and use of this information in other vehicle control systems, in particular in the system for adjusting the beam width,
- early detection of rollover,
- detection of lifting off of a wheel, and
- detection of the center of gravity of the vehicle.

## Revendications

1. Module pour bandage de roue destiné à détecter des grandeurs d'état de la roue et/ou du bandage de roue, ce module pour bandage comprenant au moins un commutateur d'accélération (6, 6', 26, 27, 28, 29) qui détermine une grandeur d'état de la roue et/ou du bandage de roue, **caractérisé en ce que**
le commutateur d'accélération (6, 6', 26, 27, 28, 29) présente un ou plusieurs seuils de commutation qui peuvent être sélectionnés et/ou réglés par une commande.

2. Module pour bandage de roue selon la revendication 1, **caractérisé en ce qu'**une grandeur caractéristique qui est une mesure de la longueur d'appui du bandage de roue ou de la durée de passage de la charge est déterminée à l'aide du commutateur d'accélération (6, 6', 26, 27, 28, 29).

3. Module pour bandage de roue selon les revendications 1 ou 2, **caractérisé en ce qu'**il comporte au moins un autre composant électronique, par exemple un détecteur et en particulier un détecteur de pression, une électronique d'évaluation, un dispositif d'émission et/ou de réception, une mémoire, un convertisseur d'énergie qui utilise une modification de l'accélération ou une déformation pour récupérer de l'énergie électrique, ou une batterie.

4. Module pour bandage de roue selon au moins l'une des revendications 1 à 3, **caractérisé en ce qu'**il comporte un circuit par lequel le module pour bandage de roue et/ou certains composants électroniques sont commandés par le commutateur d'accélération (6, 6', 26, 27, 28, 29), en particulier le branchement du module pour bandage de roue et/ou de différents composants électroniques sont commandés par le commutateur d'accélération (6).

5. Module pour bandage de roue selon au moins l'une des revendications 1 à 4, **caractérisé en ce qu'**il comporte plusieurs commutateurs d'accélération (6, 6', 26, 27, 28, 29) qui sont placés dans un boîtier, sur un substrat ou sur une carte de circuit, en particulier réalisé sous la forme d'un système MEMS.

6. Module pour bandage de roue selon la revendication 5, **caractérisé en ce que** les différents commutateurs d'accélération (6, 6', 26, 27, 28, 29) diffèrent par leur structure, leur taille, leur orientation dans le module pour bandage de roue et/ou possèdent différentes propriétés de commutation.

7. Module pour bandage de roue selon les revendications 5 ou 6, **caractérisé en ce qu'**au moins deux commutateurs d'accélération (6, 6', 26, 27, 28, 29) sont réalisés de manière à déterminer une grandeur caractéristique qui est une mesure de la longueur d'appui du bandage de roue ou de la durée d'aplatissement, chacun dans une autre plage de vitesse.

8. Module pour bandage de roue selon au moins l'une des revendications 5 à 7, **caractérisé en ce qu'**au moins un commutateur d'accélération (6, 6', 26, 27, 28, 29) est réalisé de manière à basculer d'un premier état de commutation à un deuxième état de commutation lorsqu'une vitesse prédéterminée est atteinte et à conserver ce deuxième état de commutation tant qu'il n'est pas ramené dans le premier état de commutation à l'aide d'un signal de commande.

9. Module pour bandage de roue selon l'une des revendications 5 à 8, **caractérisé en ce qu'**au moins un commutateur d'accélération (6, 6', 26, 27, 28, 29) est utilisé pour activer ou brancher le module pour bandage de roue et/ou différents composants électroniques du module pour bandage de roue.

10. Procédé de détection de grandeurs d'état d'une roue et/ou d'un bandage de roue, dans lequel une grandeur caractéristique qui constitue une mesure de la longueur d'appui du bandage de roue ou de la durée d'aplatissement est déterminée par un commutateur d'accélération, **caractérisé en ce que**
la grandeur caractéristique est déterminée dans différentes plages de vitesse par un commutateur d'accélération (6, 6', 26, 27, 28, 29) qui présente plus qu'un seuil de commutation ou par au moins deux commutateurs d'accélération (6, 6', 26, 27, 28, 29) qui présentent différentes propriétés de commutation et en particulier différents seuils de commutation.

11. Procédé selon la revendication 10, **caractérisé en ce que** le module pour bandage de roue et/ou différents composants électroniques du module pour bandage de roue sont commandés et en particulier branchés et débranchés au moyen d'un commutateur d'accélération (6, 6', 26, 27, 28, 29).

12. Procédé selon au moins l'une des revendications 10 à 11, **caractérisé en ce que** la grandeur caractéristique est utilisée pour au moins l'une des opérations suivantes :
- détermination de la position du bandage de roue sur le véhicule, en particulier en virage, pendant le freinage ou une accélération,
- alarme de pression en fonction de la charge,
- compensation du roulis, en particulier par l'intermédiaire d'un programme électronique de stabilité (ESP),
- détection de la charge des roues et utilisation de cette information dans d'autres systèmes de commande du véhicule, en particulier dans le système de régulation de la portée des phares,
- détection précoce de l'éclatement,
- détection de l'enlèvement d'une roue et
- détermination de la position du centre de masse du véhicule.
